(19)

**Europäisches Patentamt**
**European Patent Office**
**Office européen des brevets**

(11) **EP 4 368 468 B1**

(12) **EUROPEAN PATENT SPECIFICATION**

(45) Date of publication and mention
of the grant of the patent:
**26.03.2025 Bulletin 2025/13**

(21) Application number: **22207286.0**

(22) Date of filing: **14.11.2022**

(51) International Patent Classification (IPC):
*B60W 50/00* (2006.01)    *B60W 30/04* (2006.01)
*B60W 30/045* (2012.01)    *B60W 50/12* (2012.01)
*B60W 30/02* (2012.01)    *B60W 50/08* (2020.01)

(52) Cooperative Patent Classification (CPC):
**B60W 50/0097; B60W 30/02; B60W 30/045;**
**B60W 50/087; B60W 50/12;** B60W 2050/0033;
B60W 2520/18; B60W 2520/20; B60W 2540/18;
B60W 2552/40

(54) **METHOD, COMPUTER PROGRAM, COMPUTER-READABLE STORAGE MEDIUM AND VEHICLE CONTROL SYSTEM FOR CALCULATING CONTROL VARIABLES OF A VEHICLE**

VERFAHREN, COMPUTERPROGRAMM, COMPUTERLESBARES SPEICHERMEDIUM UND FAHRZEUGSTEUERUNGSSYSTEM ZUR BERECHNUNG VON STEUERGRÖSSEN EINES FAHRZEUGS

PROCÉDÉ, PROGRAMME D'ORDINATEUR, SUPPORT DE STOCKAGE LISIBLE PAR ORDINATEUR ET SYSTÈME DE COMMANDE DE VÉHICULE POUR CALCULER LES VARIABLES DE COMMANDE D'UN VÉHICULE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**15.05.2024 Bulletin 2024/20**

(73) Proprietors:
• **TOYOTA JIDOSHA KABUSHIKI KAISHA**
  **Aichi-Ken 471-8571 (JP)**
• **Czech Technical University in Prague**
  **16627 Praha 6 (CZ)**

(72) Inventors:
• **CHUMERIN, Nikolay**
  **1140 Brussels (BE)**
• **EFREMOV, Denis**
  **16627 Prague 6 (CZ)**
• **KLAUCO, Martin**
  **16627 Prague 6 (CZ)**
• **HANIS, Tomas**
  **16627 Prague 6 (CZ)**

(74) Representative: **Cabinet Beau de Loménie**
  **158, rue de l'Université**
  **75340 Paris Cedex 07 (FR)**

(56) References cited:
**DE-A1- 102016 214 564    US-A1- 2020 216 085**

• **EFREMOV DENIS ET AL: "Driving Envelope: On Vehicle Stability Through Tire Capacities", 2022 IEEE INTELLIGENT VEHICLES SYMPOSIUM (IV), 5 June 2022 (2022-06-05), pages 1188 - 1193, XP093028065, ISBN: 978-1-6654-8821-1, Retrieved from the Internet <URL:https://ieeexplore.ieee.org/stampPDF/getPDF.jsp?tp=&arnumber=9827423&ref=aHR0cHM6Ly9pZWVleHBsb3JlLmllZWUub3JnL2Fic3RyYWN0L2RvY3VtZW50Lzk4Mjc0MjM=> DOI: 10.1109/IV51971.2022.9827423**

• **LI ZIHAN ET AL: "Integrated Longitudinal and Lateral Vehicle Stability Control for Extreme Conditions With Safety Dynamic Requirements Analysis", IEEE TRANSACTIONS ON INTELLIGENT TRANSPORTATION SYSTEMS, IEEE, PISCATAWAY, NJ, USA, vol. 23, no. 10, 1 October 2022 (2022-10-01), pages 19285 - 19298, XP011922604, ISSN: 1524-9050, [retrieved on 20220303], DOI: 10.1109/TITS.2022.3152485**

- ATAEI MANSOUR ET AL: "Model Predictive Control for integrated lateral stability, traction/ braking control, and rollover prevention of electric vehicles", VEHICLE SYSTEM DYNAMICS: INTERNATIONAL JOURNAL OF VEHICLE MECHANICS AND MOBILITY, vol. 58, no. 1, 5 March 2019 (2019-03-05), GB, pages 49 - 73, XP093027780, ISSN: 0042-3114, DOI: 10.1080/ 00423114.2019.1585557

## EP 4 368 468 B1

**Description**

BACKGROUND OF THE INVENTION

1. Field of the Invention

The invention relates to a computer-implemented method for calculating control variables of a vehicle and a corresponding computer program, computer-readable storage medium and vehicle control system.

2. Description of Related Art

A user generally drives a vehicle using actions on control members that affect the behavior of the vehicle through control inputs such as a steering angle of the steering wheel of the vehicle and an angular velocity of driven wheels of the vehicle. A given set of control inputs commanded by a driver can sometimes lead to a dangerous and/or erratic behavior of the vehicle. Such behavior, i.e., dynamics, of the vehicle can be parametrized by a set of state variables that depend on the dynamical model of the vehicle that is used.

Active stability systems are used to control the behavior of vehicles in order to improve safety and performances of vehicles in relation with certain criteria. For example, anti-lock brake systems (ABS) keep the wheel from locking in order to provide stability, and traction control systems (TCS) prevent the wheel from large slip ratio in order to provide slip control in traction. However, these systems may have independent stability objectives that can enter in conflict and may degrade the overall performance of the vehicle and increase the system complexity.

Recently, Model Predictive Control (MPC) has been proposed to control the behavior of a vehicle. MPC predicts future state variables using a dynamical model of a vehicle and a minimization algorithm. In particular, knowing the state variables at a predetermined time, MPC can predict the state variables at a subsequent time that would be caused by a given set of control inputs. With this prediction, it can in particular be determined if the predicted state variables are within ranges corresponding to a safe behavior of the vehicle or, conversely, if they are within ranges corresponding to an unsafe behavior of the vehicle that could, for example, lead to accidents and, in that case correct or replace control inputs of the driver.

The present invention presents a computer-implemented method for calculating control variables of a vehicle and a corresponding computer program, computer-readable storage medium and vehicle control system.

The following references disclose various methods relating to vehicle stabilization and to model predictive controllers applied to the control of the behavior of a vehicle.

[REF 1] BEAL, Craig Earl et GERDES, J. Christian. Model predictive control for vehicle stabilization at the limits of handling. IEEE Transactions on Control Systems Technology, 2012, vol. 21, no 4, p. 1258-1269.

[REF 2] EFREMOV, Denis, KLAUČO, Martin, et HANIŠ, Tomáš. Driving Envelope: On Vehicle Stability Through Tire Capacities. In : 2022 IEEE Intelligent Vehicles Symposium (IV). IEEE, 2022. p. 1188-1193.

[REF 3] FALCONE, Paolo, TSENG, H. Eric, ASGARI, Jahan, et al. Integrated braking and steering model predictive control approach in autonomous vehicles. IFAC Proceedings Volumes, 2007, vol. 40, no 10, p. 273-278.

[REF 4] ATAEI, Mansour, KHAJEPOUR, Amir, et JEON, Soo. Model predictive control for integrated lateral stability, traction/braking control, and rollover prevention of electric vehicles. Vehicle system dynamics, 2020, vol. 58, no 1, p. 49-73.

[REF 5] DE 10 2016 214564 A1 discloses a method for controlling the vehicle dynamics of a vehicle.

SUMMARY OF THE INVENTION

The present invention relates to a computer-implemented method for calculating control variables of a vehicle comprising:

- providing a dynamical model of the vehicle describing the vehicle dynamics, the dynamical model comprising state variables, the state variables comprising at least two variables representative of lateral motion of the vehicle and/or rotational motion of the vehicle, such at least two variables being function of lateral slip dynamics and/or longitudinal slip of one or more wheels of the vehicle;
- acquiring input control variables based on controls transmitted by a driver of the vehicle through control members, the input control variables comprising at least a steering angle of a wheel of the vehicle or an angular velocity of such wheel;
- acquiring the state variables of the vehicle;
- based on the acquired input control variables and the acquired state variables, calculating at least one output control

3

variable representative of the controls of the vehicle using model predictive control; wherein

- calculating at least one output control variable of the vehicle using model predictive control is based on the dynamical model of the vehicle, so as to minimize a cost function over a receding horizon using the acquired input control variables as an input target while satisfying constraints;
- the constraints including at least one driving envelope constraint for at least one wheel of the vehicle,
- said at least one driving envelope constraint defining, for two parameters of said at least one wheel, an allowable two-dimensional domain within which slipping of the at least one wheel is considered allowable, such two parameters describing longitudinal slip and lateral slip of the at least one wheel;

wherein acquiring input control variables based on controls transmitted by a driver of the vehicle through the control members comprises:

- measuring a tire reaction torque of a wheel;
- acquiring controls transmitted by a driver through throttle and brake pedals comprised in the control members; and
- based on the acquired controls, on the measured tire reaction torque, and on a drivetrain model of the vehicle, calculating a commanded angular velocity of a wheel.

Here, at a vehicle level, the vehicle longitudinal direction is defined as a heading direction of the vehicle, and the vehicle lateral direction is defined as a direction perpendicular to the heading direction of the vehicle.

Here, dynamics of a vehicle refers to a motion of the vehicle. Such motion is described by state variables that may comprise a yaw rate of the vehicle (i.e. rotational motion of the vehicle around the center of gravity of the vehicle) of the vehicle, and a sideslip angle of the vehicle (i.e. an angle between the vehicle longitudinal direction and the traveling direction of the vehicle center of gravity of the vehicle).

Here, at a wheel level, the wheel longitudinal direction is defined as a steering direction of such wheel, and the wheel lateral direction is defined as a direction perpendicular to the steering direction of such wheel.

In the present description, the lateral slip a wheel of the vehicle refers to a parameter describing slip dynamics of such wheel in the wheel lateral direction. The lateral slip may be characterized, for example, by a sideslip angle of such wheel. Further, the longitudinal slip of a wheel of the vehicle refers to a parameter describing slip dynamics of such wheel in the wheel longitudinal direction. The longitudinal slip of a wheel may be characterized, for example, by a slip ratio of such wheel.

The method according to the present invention provides an optimal control strategy that simultaneously utilizes steering, braking and acceleration to provide lateral stability and longitudinal stability of one or more wheels of the vehicle.

Control inputs by a driver of the vehicle are followed as closely as possible using a model predictive control while ensuring that one or more wheels of the vehicle is prevented from excessive slipping and slips only to a predetermined extent based on an allowable domain that is set for one or more slip of the considered wheels.

According to embodiments the constraints include at least one driving envelope constraint on each wheel of the vehicle, the driving envelope constraint of each wheel setting an allowable two-dimensional range for a lateral slip and a longitudinal slip of said wheel.

Advantageously, each wheel of a vehicle may therefore be constrained using the present method, so that each wheel of the vehicle may be prevented form wheelspin, wheel-locking, and wheel-skidding.

The present invention is suitable for any conventional vehicle, without requiring extra equipment on the vehicle regardless of the type of driving actuators that are used such as engines, brakes and steering systems.

According to embodiments, the driving envelope constraint is expressed in terms of a maximum value of a longitudinal slip and a maximum value of a lateral slip of the at least one wheel.

According to embodiments, the driving envelope constraint is expressed in terms of a maximum value of a function of a longitudinal slip and a lateral slip of the at least one wheel.

According to embodiments, the function of the longitudinal slip and the lateral slip of the at least one wheel is a norm of a combined slip vector calculated based on the longitudinal slip and the lateral slip of the at least one wheel.

According to embodiments, the driving envelope constraint is expressed in terms of a maximum value of a linear combination of the longitudinal slip and the lateral slip of the at least one wheel.

According to embodiments, the lateral slip of the at least one wheel comprises a sideslip angle of the at least one wheel; and the longitudinal slip of the at least one wheel comprises a slip ratio of the at least one wheel.

According to embodiments, an area of the allowable two-dimensional domain is fixed by selecting a maximum lateral slip and a maximum longitudinal slip.

According to embodiments, the constraints comprise at least two different driving envelope constraints for the at least one wheel of the vehicle, and wherein the method further comprises a step of selecting one of the two different driving envelope constraints according to a driving mode.

Carmakers are generally trying to provide different driving mode settings in modern cars. However, carmakers generally utilize only changing of suspension or different gains from pedals to the drivetrain, brakes, and steering wheel to the steering column. The proposed strategy improves over the latter by fixing constraints that are derived from physical limitations of forces on wheels and projected onto the vehicle state variables.

For instance, in a sport mode a driving envelope constraint may set a significantly large allowable range for both lateral slip and longitudinal slip, allowing a driver to be closer to the edge of tire capacities and perform, for example, drifting maneuvers. Further, in a highway mode, a driving envelope constraint may set an allowable range with less allowed lateral slipping in order to optimize for the driver comfort of vehicle handling and increase safety on a highway when the vehicle is driven at higher velocities. Further, in a city mode, a driving envelope constraint may set an larger allowable range for lateral slipping in order to allow for short turning at a low speed.

According to embodiments, acquiring input control variables based on controls transmitted by a driver of the vehicle through control members comprises expressing at least one of the controls as being proportional to an input control variable.

According to embodiments, the method further comprises the steps of:

- based on the at least one output control variable, calculating at least one corrected control, and
- using the at least one corrected control, instead of a control of the driver, to control the vehicle.

According to embodiments, the method further comprises tracking an angular velocity of a wheel with a controller so as to calculate the corrected controls on the braking and throttle pedals of the vehicle.

According to embodiments, the constraints further include at least one driving envelope constraint on at least a second wheel of the vehicle, the driving envelope constraint setting an allowable range for at least a sideslip angle of the at least second wheel.

In embodiments, the proposed method is determined by computer program instructions.

Accordingly, another purpose of the present invention is to propose a computer program comprising instructions which, when the instructions are executed by a computer, cause the computer to carry out the steps of one of the above-defined methods.

The computer program may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present invention also includes a non-transitory computer readable medium, having the one or more above-defined computer program(s) stored thereon, the non-transitory computer readable medium comprising instructions which, when the instructions are executed by a computer, cause the computer to carry out the steps of one of the above-defined methods.

The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present invention further relates to a vehicle control system for controlling control variables of a vehicle comprising one or more processors and a computer-readable medium; the computer-readable medium comprising computer instructions stored therein, wherein the instructions, when executed by the one or more processors, cause the one or more processors to carry out the steps of one of the above-defined methods.

The present invention further includes an advanced driving assistance system for a vehicle, which comprises a system as defined above.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- FIG. 1 is a schematic view showing a vehicle comprising a control system in accordance with the present disclosure;
- FIG. 2 is a diagram illustrating a dynamical model of a vehicle according to embodiments;
- FIG. 3 is a diagram illustrating a method for calculating control variables of a vehicle, according to embodiments; and
- FIG. 4 is a chart illustrating traction forces of a vehicle during a maneuver with and without using a control system according to embodiments.

DETAILED DESCRIPTION OF EMBODIMENTS

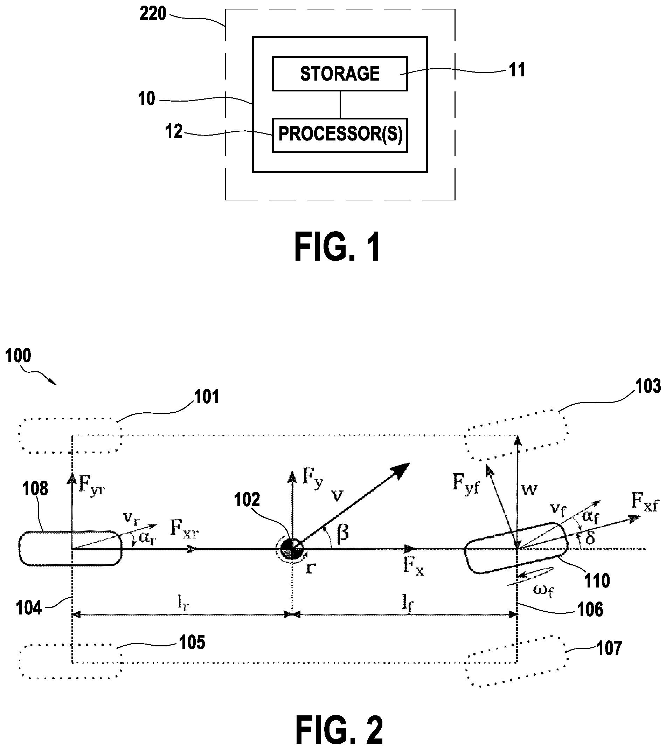

Methods and systems for calculating control variables of a vehicle, which constitute exemplary embodiments of the present invention are now going to be presented in relation with FIGS.1-4.

Although the present description mainly describes a computer-implemented method for calculating control variables of a vehicle, it is contemplated that the present invention relates, at least equivalently, to a control system configured to implement steps of such a method. Such system may be, for example, an electronic control unit of a vehicle.

As an example, in reference to FIG. 1, a vehicle 220 comprises a control system 10 comprising one or more processors 12 and a non-transitory storage medium 11. The one or more processors 12 are intended to be representative of the presence of any one or more processors or processing devices, of any of a variety of forms. In addition, although the control system is represented on FIG. 1 in a single box, such control system 10 may be a distributed calculation system, comprising a plurality of processors, possibly physically arranged on different locations. For instance, part of processors 12 may be part of a remote server.

The method according to the present invention has been developed in order to control the behavior of a vehicle so as to avoid unsafe situations that can lead to accidents. In the present invention, behavior of a vehicle refers to a dynamical state of the vehicle that can be represented by state variables in relation to a dynamical model of the vehicle. The number and type of state variables may depend on the dynamical model used to represent the vehicle.

Further, the method according to the present invention may also be used to calculate control variables of a vehicle in view of enhancing vehicle performance, for example in terms of a maximization of tire traction forces while respecting physical limits at the interface between tires and road. The projection of tire forces at a wheel level alone is generally not sufficient but the method according to the present invention provides a way to project physical limits to the vehicle level.

In the present invention, the control method is based on Model Predictive Control (MPC). Although methods relying on Model Predictive Control to control a car have been proposed, see the list of references above, they tend to focus only on partial control of a car, for example lateral stability and traction control.

The method and system of the present invention aim at providing model predictive control strategy that can account for combined stability of a vehicle i.e. both lateral stability and longitudinal stability of the vehicle. Further, the proposed method may utilize every actuator of the vehicle to control the combined stability of the vehicle.

In the present description, the stability of a vehicle may be parametrized in terms of lateral slip and longitudinal slip of the wheels of the vehicle. For each wheel of a vehicle, the lateral slip may comprise a sideslip angle ($\alpha$) describing the lateral stability of the wheel, and the longitudinal slip may comprise a slip ratio ($\lambda$), describing the longitudinal stability of the wheel.

In the embodiment presented herein, the control method utilizes a dynamical model of the vehicle. Any dynamical model of the vehicle which takes into account separately the behavior of the wheels of a vehicle with regard to slipping may be used to implement the methods or systems according to the present disclosure.

For instance, in reference to FIG. 2, dynamics of a vehicle may be represented by a single-track model 100. The single track model 100 assumes that the dynamics of a vehicle with two rear wheels 101, 105 on a rear axle 104 and two front wheels 103, 107 on a front axle 106, can be reduced to the dynamics of a vehicle center of gravity 102, a single rear wheel 108 and a single front wheel 109 at respective predetermined distances (l_f, l_r) of the center of gravity 102 of the car on a vehicle longitudinal axis of symmetry.

Although, in the model represented in FIG. 2, the four wheels of a vehicle are reduced to two single wheels, the methods of the present invention may consider the slipping dynamics of the wheels of a vehicle to be partially or completely independent.

In embodiments, the car may be assumed to be a conventional car with four wheels, front-wheel steering, front-wheel drive and braking with constant torque distribution over the two driven wheels (for example the two front wheels 103, 107). Further, rotational velocity of the rear axle 104, may be neglected because the braking moment acts most substantially on the front axle 106. Braking torque distribution may be for example, 2:1 (front vs. rear axles), and weight distribution may be, for example, 62:48 (front vs. rear axle). The presented methodology is discussed only as exemplary and the method according to the present invention may adapt to any other combination of vehicle.

In reference to FIG. 2, the state of the vehicle modelled by the single-track model 100 may comprise the following variables and parameters. Such state variables are only intended as exemplary, any other suitable representation of vehicle dynamics, including kinematic model or non-parametric representation could be used.

Table I

| Variable | Symbol | Units |
|---|---|---|
| Vehicle velocity | $v$ | m.s$^{-1}$ |
| Vehicle sideslip angle | $\beta$ | rad |

(continued)

| Variable | Symbol | Units |
|---|---|---|
| Vehicle yaw rate | $r$ | rad.s$^{-1}$ |
| Steering wheel angle | $s$ | rad |
| Brake pedal application | $b$ | % |
| Throttle application | $t$ | % |
| Steering angle of front wheels | $\delta$ | rad |
| Angular velocity of wheel | $\omega$ | rad.s$^{-1}$ |
| Drive torque | $\tau_d$ | N.m |
| Brake torque | $\tau_b$ | N.m |
| Tire reaction torque | $\tau_t$ | N.m |
| Current powertrain ratio | $k_{gear}$ | - |
| Load force | $F_z$ | N |
| Traction forces of wheel | $F_x$ and $F_y$ | N |
| Sideslip angle of wheel | $\alpha$ | rad |
| Slip ratio of wheel | $\lambda$ | - |

In the present description, the subscripts "y" or "x" refer to lateral or longitudinal direction, respectively, the subscripts "f" or "l" refer to the front or rear axle, respectively, and the subscripts "L" or "R" refer to left side or right side, respectively.

Parameters of the model are gathered in the following table.

Table II

| Parameter | Symbol | Units |
|---|---|---|
| Vehicle mass | $m$ | kg |
| Yaw moment inertia | $I$ | kg.m$^2$ |
| Distance between front axle and center of gravity | $l_f$ | m |
| Distance between rear axle and center of gravity | $l_r$ | m |
| Maximum possible steering angle | $\delta_{max}$ | rad |
| Front tire lateral nominal stiffness | $c_{af}$ | rad$^{-1}$ |
| Rear tire lateral nominal stiffness | $c_{ar}$ | rad$^{-1}$ |
| Half of front axle width | $w$ | m |
| Effective wheel radius with constant torque | $P$ | m |
| Front axle and wheels moment of inertia | $l_W$ | kg.m$^2$ |

In embodiments, dynamics of the vehicle may be assumed to be a second-order approximation describing the lateral motion of the vehicle. In particular, it may be assumed that the sideslip angle, β, is small enough to use the small angle approximation and that the longitudinal velocity, v, of the vehicle is constant. Due to the constant velocity, traction forces acting in the longitudinal direction (longitudinal traction forces) may be neglected.

In embodiments, based on the dynamical model and the assumptions aforementioned, equations of motion of the center of gravity 102 of the vehicle may be written as:

$$mv\left(\dot{\beta} + r\right) = F_{yf} + F_{yr} \qquad \text{(Equation 1)}$$

$$I\dot{r} = l_f F_{yf} - l_r F_{yr} \qquad \text{(Equation 2)}$$

The right-hand side of Equation 1 represents lateral traction forces acting on the center of gravity 102 of the vehicle. The right-hand side of Equation 2 represents resulting generalized forces applied around the center of gravity 102 of the vehicle. Such equations are linear approximations provided at a baseline operation point defined by a zero yaw rate, a zero steering angle and a zero sideslip angle of the vehicle, i.e. a situation wherein a vehicle moves straight forward with a constant longitudinal velocity.

In embodiments, the wheel traction forces acting in the lateral direction (lateral traction forces) may be linearly approximated similarly for both axles as:

$$F_{yi} = c_{\alpha i} F_{zi} \alpha_i \qquad \text{(Equation 3)}$$

wherein $c_f$ is the nominal cornering stiffness of a tire, $F_{zi}$ is the load force acting on an axle, and $\alpha_i$ is the sideslip angle of an axle, and "i" represents the axle (i.e. it can be either "r", rear, or 'f', front).

Further, the sideslip angle of the front axle ($\alpha_f$) and the sideslip angle of the rear axle ($\alpha_r$) can also be linearly approximated, respectively, as:

$$\alpha_f = \delta - \beta - \frac{l_f}{v} r \qquad \text{(Equation 4)}$$

and

$$\alpha_r = \delta - \beta + \frac{l_r}{v} r \qquad \text{(Equation 5)}$$

Further, the following variables may be chosen to model the motion of the vehicle. A state vector x(t) representing the state of the vehicle, which may be written as:

$$x = \begin{bmatrix} \beta \\ r \end{bmatrix} \qquad \text{(Equation 6)}$$

and an input vector u(t) representing the control variables on which a driver or a controller can act, which may be written as:

$$u = \begin{bmatrix} \delta \\ \omega_f \end{bmatrix} \qquad \text{(Equation 7)}$$

It is contemplated that the methods and systems of the present disclosure may account for both the lateral and longitudinal motion of a vehicle. To this end, both the steering angle of the vehicle ($\delta$) and the angular velocity of the front wheels ($\omega_f$) are taken as inputs in the equations of motion of the vehicle.

Based on the above assumptions and variables, the linearized equations of motion may be expressed, in a matrix form, as:

$$\dot{x}(t) = A\,x(t) + B\,u(t) \qquad \text{(Equation 8)}$$

where A and B are system matrices that can be calculated, for example, by first-order Taylor expansion.

As an example, systems matrices A and B may be expressed as:

$$A = \begin{bmatrix} -\dfrac{c_f F_{zf} + c_r F_{zr}}{mv} & \dfrac{l_r c_r F_{zr} - l_f c_f F_{zf}}{mv^2} - 1 \\ \dfrac{l_r c_r F_{zr} - l_f c_f F_{zf}}{I} & -\dfrac{l_r{}^2 c_r F_{zr} + l_f{}^2 c_f F_{zf}}{v\,I} \end{bmatrix} \qquad \text{(Equation 9)}$$

and

$$B = \begin{bmatrix} \dfrac{c_f\, F_{zf}}{mv} & 0 \\ \dfrac{l_f c_f\, F_{zf}}{I} & 0 \end{bmatrix}$$

(Equation 10)

Although Equation 8 is a continuous-time description of the motion of the vehicle, according to embodiments, discrete-time vehicle dynamics can be used. Accordingly, the equations of motion may be obtained, for example, through Euler discretization of the continuous-time system of Equation 8.

According to embodiments, equations of discrete-time dynamics of the vehicle may be expressed as:

$$x_{k+1} = A_d x_k + B_d u_k$$

(Equation 11)

where $A_d$ and $B_d$ are discrete system matrices, $x_k$ is a discrete state vector, and $u_k$ is a discrete input vector.

In view of the above, according to embodiments, a problem solved by the system and method of the present invention is how to calculate an optimal input vector, $u$, so that the value of the state vector, $x$, and the input vector remain in predetermined ranges, for example ranges corresponding to safe operation of the vehicle. To this end, the methods and systems according to the present disclosure are based on a model predictive control algorithm to minimize a cost function comprising the parameters and variables of a dynamical model of a vehicle. Further, constraints on state variables are imposed in the cost function in order to confine the behavior of the vehicle to safe situations.

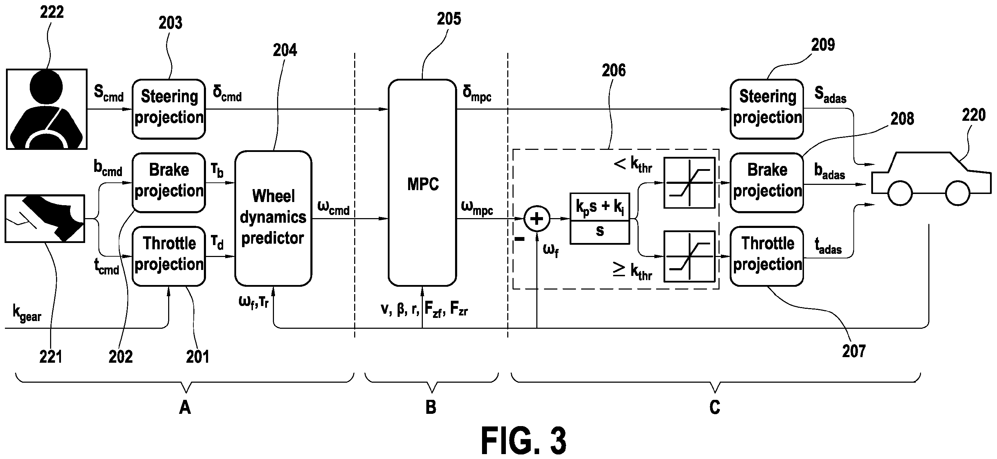

Referring to FIG. 3, according to embodiments, the method of the present invention aims at safely controlling a vehicle 220, such as a car, taking into account actions of a driver on control members 221, 222 of the vehicle 220. The control members generally comprise braking and throttle pedals 221, and a steering wheel 222. The method according to the present invention may be divided in three sub-elements: A, a projection of the actions of the driver on the control members 221, 222 to input control variables; B, a calculation of optimized control variables by a model predictive controller 205; and C, a projection of the optimized control variables to instructions on the control members of the vehicle 220.

According to embodiments, the actions of the driver on the control members 221, 222 may be converted to input control variables, for example a steering command, $\delta_{cmd}$ , on the steering angle of the car and an angular velocity command, $\omega_{cmd}$, on the angular velocity of the driving wheels, for example the front wheels. As an example input command projections 201, 202, 203 and a wheel dynamics predictor may be used.

In embodiments, actions of the driver on control members may comprise any input of the driver that contributed to setting one or more characteristics defining a desired trajectory of the vehicle. Such characteristics may comprise, for example, a desired acceleration of the vehicle at the vehicle's center of gravity.

According to embodiments, the method for controlling the control variables of a vehicle comprises an MPC algorithm 205 which takes as input: the input commands from the driver and a set of state variables describing the state of the vehicle 220. Although FIG. 3, for the sake of an example, represents an embodiment of the method comprising a particular set of commands and state variables, other embodiments of the method may comprise different sets of input commands and/or different sets of state variables. Further, the sets of state variables may depend on the dynamical model of the vehicle that is used.

Once the optimized control variables are calculated with the MPC algorithm 205 of the method according to the present disclosure, the optimized control variables may be projected to instructions on the control members to replace the commands of the driver and effectively affect the behavior of the vehicle 220. The projection of the optimized control variables may be done, for example, using a proportional-integral (PI) controller 206 and output command projections 207, 208, 209.

In the method and system according to the present invention, the MPC algorithm (205) outputs optimized control variables (for example, optimized steering command, $\delta_{MPC}$ , and optimized angular velocity command, $\omega_{mpc}$) that ensure that the state of the vehicle will remain in a safe zone with respect to a particular set of constraints. The condition that the state of vehicle remains in a safe zone may be implemented by imposing that a particular set of state variables remain in an allowable range defined by the constraints. This allowable range for the state variables that is to be set as a constraint in the MPC algorithm can be described as a driving envelope in the space of state variables.

In embodiments, the constraints on the state variables may be derived from the physical limitations imposed to the structure of the vehicle, for example to the wheels of the vehicle. In particular, it is possible to derive the constraints on the state variables based on the fact that, during safe operation of a vehicle, the traction forces (Fx, Fy) generated by the wheels cannot exceed the load force (Fz) with which the rigid body of the vehicle acts on the wheels. For a wheel of the vehicle, this implies that a force vector formed of the traction forces (when taking into account friction coefficients) cannot be greater, in magnitude, than the magnitude of the load force.

Such condition can be written as:

$$\sqrt{\left(\frac{F_x}{c_{1x}}\right)^2 + \left(\frac{F_y}{c_{1y}}\right)^2} \leq \mu F_z \qquad \text{(Equation 12)}$$

wherein $\mu$ is a global friction coefficient between a tire of a wheel and the road surface, and wherein $c_{1x}$ and $c_{1y}$ are friction coefficients between the tire and the road surface in the longitudinal and lateral direction, respectively.

The condition of Equation 12 restricts both the longitudinal traction force (Fx), related to the longitudinal dynamics of a wheel, and the lateral traction force (Fy), related to the lateral dynamics of such wheel, by defining an elliptic driving envelope in the space represented by the longitudinal and lateral traction forces. Therefore, this condition is known as a traction ellipse or a friction ellipse. When the condition is verified, i.e. when the traction forces have values within the elliptic driving envelope defined by Equation 12, the vehicle can be considered to be in a safe situation wherein stability is ensured.

Further, the traction forces generated by the wheels of a vehicle are dependent on wheel slip variables in both lateral (y) and/or longitudinal direction (x), the wheel slip variables of a wheel being the slip ratio $\lambda$ and the sideslip angle $\alpha$.

In embodiments, for each wheel of the vehicle, the condition of Equation 12 is advantageously expressed in terms of a condition on the slip ratio $\lambda$ and/or the sideslip angle $\alpha$ and/or a linear combination of the slip ratio and the side slip angle.

In embodiments, a condition of combined stability of a wheel of a vehicle may be expressed in terms of a maximum value of a function of the slip ratio and the sideslip angle of the wheel.

In particular, a condition of combined stability of a wheel of a vehicle may be expressed in terms of a combined slip vector, $\bar{\sigma}$, which may be defined, for example, as:

$$\bar{\sigma} = \begin{bmatrix} \sigma_x & \sigma_y \end{bmatrix} = \begin{bmatrix} \dfrac{\lambda}{1-\lambda} & \dfrac{\tan\alpha}{1-\lambda} \end{bmatrix} \qquad \text{(Equation 13)}$$

In such case, a driving envelope can be defined by imposing that a norm of the combined slip vector remains smaller than a predetermined maximum norm of a combined slip vector $\bar{\sigma}_{MAX}$ which is achieved when a tire transmits maximum lateral or longitudinal traction forces to the vehicle while remaining in an allowable two-dimensional slipping domain for $\lambda$ and $\alpha$. Such a driving envelope condition may be expressed, for a considered wheel of a car, as the following condition:

$$\|\bar{\sigma}\| \leq \|\bar{\sigma}_{MAX}\| = \begin{bmatrix} \dfrac{\lambda_{max}}{1-\lambda_{max}} & \dfrac{\tan\alpha_{max}}{1-\lambda_{max}} \end{bmatrix} \qquad \text{(Equation 14)}$$

where $\alpha_{max}$ is a maximum sideslip angle of the considered wheel, and $\lambda_{max}$ is a maximum slip ratio of the considered wheel. Such maximum values are control parameters that can be set to define the size of the driving envelope.

In embodiments, for a wheel of the vehicle, the driving envelope condition of Equation 14 may be linearized and normalized so as to be expressed in terms of a linear combination of the slip ratio and the sideslip angle of the considered wheel:

$$\sigma = \frac{1-\lambda_{max}}{\lambda_{max}}|\lambda| + \frac{1-\lambda_{max}}{\tan\alpha_{max}}|\alpha| \leq 1 \qquad \text{(Equation 15)}$$

Although the condition of Equation 15 only constrains lateral slip and longitudinal slip of a single wheel, similar conditions may be formulated to constrain the lateral slip and the longitudinal slip of other wheels of the vehicle. Further, different conditions may be imposed on different wheels of the vehicle. For example, a condition on the combined slip vector may be imposed on the two front wheels of a vehicle while a condition affecting only the sideslip angle may be imposed on the two rear wheels of the vehicle.

The method and system according to the present invention aim at optimizing at least one control variable, for example two output control variables ($\delta_{mpc}$, $\omega_{mpc}$) so that the state of the vehicle remains safe while taking into account, when possible, the controls (inputs) of the driver on the control members (221, 222) of the vehicle 220. To this end, model predictive control 205 (MPC) is used to track inputs of the driver as closely as possible. The MPC may be formulated as a linear convex constrained finite time optimal control problem (OCP) that is solved repeatedly in a receding horizon fashion.

In embodiments, the MPC may be formulated as a linear quadratic objective function, such as the expression that follows:

$$C = \min_{u_0,\dots,u_{N-1}} \sum_{k=0}^{N-1} \left[ R_1 |r - u_k| + (r - u_k)^{\mathrm{T}} R_2 (r - u_k) \right.$$
$$+ (u_k - u_{k-1})^{\mathrm{T}} R_{du} (u_k - u_{k-1}) \Big]$$
$$+ \sum_{k=0}^{N} \left( s_{i,k}^{\mathrm{T}} Q_i s_{i,k} + s_{e,k}^{\mathrm{T}} Q_e s_{e,k} \right)$$

(Equation 16)

the objective function C being defined over a prediction horizon $N$, where $k$ is a prediction step. Other parameters of the equation are listed in the table III presented later on.

The objective function may be minimized in order to obtain an output vector $u_k$, comprising output control variables ($\delta_{mpc}$, $\omega_{mpc}$), wherein the output vector tracks the input vector $r$ comprising the input control variable ($\delta_{cmd}$, $\omega_{cmd}$) commanded by the driver of the vehicle. By tracking, it is meant that it is attempted to obtain output control variables as close as possible to the input control variables, while satisfying constraints of the system. As described earlier, in the method and system according to the present invention, some of the constraints may be derived from physical conditions on the wheels in order to ensure stability of the vehicle.

Slack variables $s_e$ and $s_i$ may be introduced in the cost function with related slack penalties $Q_e$ and $Q_i$ in order to avoid possible numerical issues and to ensure that the constraints may always be satisfied to a certain degree.

The first terms of the first line of Equation 16 represents the fact that the output vector tracks the input vector. The terms of the second line of equation 16 represent a penalization of fast input changes that aims at achieving a smooth control of the control variables of the vehicle to make the driving process smoother. The terms of the third line of equation 16 represent a penalization of the slack variables.

In embodiments, the constraints imposed while minimizing the cost function C may be written as:

$$x_{k+1} = A_d \, x_k + B_d u_k \qquad \text{(Equation 17)}$$

$$|u_k - u_{k-1}| \le \Delta u_{max} + s_i \qquad \text{(Equation 18)}$$

$$|u_k| \le u_{max,k} \qquad \text{(Equation 19)}$$

$$s_{i,k} \ge 0 \qquad \text{(Equation 20)}$$

$$\sigma_{r,k} \le 1 + s_{e,k}^{(1)} \qquad \text{(Equation 21)}$$

$$\sigma_{r,k} \le 1 + s_{e,k}^{(2)} \qquad \text{(Equation 22)}$$

$$|\alpha_{r,k}| \le \alpha_{r,max} + s_{e,k}^{(3)} \qquad \text{(Equation 23)}$$

$$s_{e,k}^{(1,2,3)} \ge 0 \qquad \text{(Equation 24)}$$

$$x_0 = x(t) \qquad \text{(Equation 25)}$$

$$u_{-1} = u(t - T_s) \qquad \text{(Equation 26)}$$

The parameters of the equations are listed in the following table.

Table III

| Parameter | Symbol |
|---|---|
| Prediction horizon | $N$ |
| Sampling time | $T_s$ |
| Reference tracking linear weight | $R_1$ |
| Reference tracking quadratic weight | $R_2$ |
| Fast input change penalty | $R_{du}$ |
| Slew slack penalization | $Q_i$ |
| Envelope slack penalization | $Q_Q$ |
| Rear axle sideslip angle boundary | $\alpha_{r,max}$ |
| Front axle sideslip angle boundary | $\alpha_{f,max}$ |
| Front wheels slip ratio boundary | $\lambda_{f,max}$ |
| Slew rate limit for steering angle | $\Delta u_{max}(1)$ |
| Slew rate limit for angular velocity | $\Delta u_{max}(2)$ |
| Maximum steering angle | $u_{max}(1)$ |

Equation 17 represents a constraint imposed by the physics describing the motion of the vehicle using a dynamical model of the vehicle. Equation 17 is written in terms of a discretized time with a predetermined sampling time, $T_s$, but may also be written in terms of a continuous time.

Equation 18 represents the maximum possible changes in the input vector that is obtained after one prediction step $k$, i.e., a slew protection. Such maximum possible changes in the input vector may be expressed in terms of a slew rate limit vector defined as follows: $\Delta u_{max} = [du_{max}(1)\ \Delta u_{max}(2)]$.

Equation 19 represents the maximum possible value of the inputs comprised in the input vector.

Equation 20 represents the fact that the slack variable introduced in the condition of equation 18 must be equal or greater than zero at any prediction step $k$.

Equation 21 represents a driving envelope constraint for the left front wheel of the vehicle. In embodiments, the constraint is an inequality imposed on the combined slip vector of the left front wheel that ensures that the left front wheel does not loose traction. A slack variable may be added in the inequality in order to allow for small violations of the constraint.

Equation 22 represents a driving envelope constraint for the right front wheel of the vehicle. In embodiments, the constraint is an inequality imposed on the combined slip vector of the right front wheel that ensures that the right front wheel does not loose traction. A slack variable may be added in the inequality in order to allow for small violations of the constraint.

Equation 23 represents a driving envelope constraint for the rear wheels of the vehicle. In embodiments, the constraint is an inequality imposed on the sideslip angle of the rear wheels that prevents an over-steering maneuver of the vehicle. A slack variable may be added in the inequality in order to allow for small violations of the constraint.

Equation 24 represents the fact that the slack variables $s_{e,k}^{(1)}, s_{e,k}^{(2)}, s_{e,k}^{(3)}$ introduced in the condition of Equations 21-23 must be equal or greater than zero at any prediction step $k$.

Equation 25 and 26 represents the initialization conditions of the model predictive control. In particular, Equation 25 relates to the initialization of the vehicle state by imposing initial values of the state vector $x(t=0)$. Equation 26 relates to the initialization of the input state by imposing values of the input vector in a previous sampling time, $t - T_s$, i.e., before the MPC is used to calculate updated control variables.

In the embodiments described in relation to Equations 16-26, different driving envelope constraints are imposed on the front wheels compared to the rear wheels, mainly due to the fact the vehicle is assumed to be front-wheel driven wherein braking moment is mostly applied on the front axle. However, in other embodiments of the present disclosure, the driving envelope constraints of equation 21 and 22 may be imposed on each of the four wheels of a vehicle. This can be particularly advantageous, for example, in the case of a four-wheel drive vehicle.

The method according to the present description provides a way to calculate control variables of a vehicle. Further, the calculated control variables may be used to control a vehicle and optimize the behavior of this vehicle while ensuring safe operation of the vehicle.

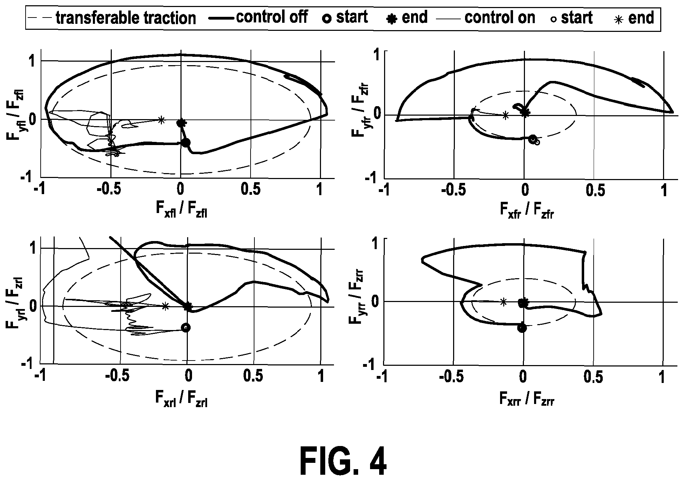

In particular, in reference to FIG. 4, when using a control system implementing the method according to the present invention to control the exemplary motion of a vehicle subject to cornering and braking, the wheels of a controlled vehicle do not violate a traction ellipse driving envelope that has been imposed in the formulation of the MPC.

In particular, when the control system is off, i.e. when the control variables used to control the vehicle do not originate from the control system, the wheels of the vehicle are subject to traction forces that go beyond the driving envelope. The uncontrolled car acts on wheel mounting point with force, which the tire could not transfer to the place of contact with the surface.

When the control system is on, i.e. when the control variables originating from a driver's input are replaced by control variables calculated with the method according to the present disclosure, wheel locking is prevented during cornering braking and right wheels are maintained on the edge of their traction capacities.

It is intended that the specification and examples be considered as exemplary only, with a true scope of the invention being indicated by the following claims.

**Claims**

1. A computer-implemented method for calculating control variables of a vehicle comprising:

   - providing a dynamical model (100) of the vehicle describing the vehicle dynamics, the dynamical model (100) comprising state variables, the state variables comprising at least two variables ($\beta$, $r$) representative of lateral motion of the vehicle and/or rotational motion of the vehicle, such at least two variables being function of lateral slip and/or longitudinal slip of one or more wheels of the vehicle;
   - acquiring input control variables based on controls ($s_{cmd}$, $b_{cmd}$, $t_{cmd}$) transmitted by a driver of the vehicle (220) through control members (221, 222), the input control variables comprising at least a steering angle ($\delta_{cmd}$) of a wheel (103, 107) of the vehicle or an angular velocity ($\omega_{cmd}$) of such wheel (103, 107);
   - acquiring the state variables ($\beta$, $r$) of the vehicle;
   - based on the acquired input control variables ($\delta_{cmd}$, $\omega_{cmd}$) and the acquired state variables ($\beta$, $r$), calculating at least one output control variable ($\delta_{adas}$, $\omega_{adas}$) representative of the controls of the vehicle using model predictive control (205); wherein

     - calculating at least one output control variable ($\delta_{adas}$, $\omega_{adas}$) of the vehicle using model predictive control (205) is based on the dynamical model (100) of the vehicle, so as to minimize a cost function (C) over a receding horizon using the acquired input control variables ($\delta_{cmd}$, $\omega_{cmd}$) as an input target while satisfying constraints;
     - the constraints including at least one driving envelope constraint for at least one wheel (103, 107) of the vehicle,
     - said at least one driving envelope constraint defining, for two parameters of said at least one wheel, an allowable two-dimensional domain within which slipping of the at least one wheel is considered allowable, such two parameters describing longitudinal slip and lateral slip of the at least one wheel;

   wherein acquiring input control variables ($\delta_{cmd}$, $\omega_{cmd}$) based on controls ($s_{cmd}$, $b_{cmd}$, $t_{cmd}$) transmitted by a driver of the vehicle (220) through the control members (221, 222) comprises:

     - measuring a tire reaction torque $\tau_r$) of a wheel;
     - acquiring controls ($b_{cmd}$, $t_{crnd}$) transmitted by a driver through throttle and brake pedals (221) comprised in the control members (221, 222); and
     - based on the acquired controls ($b_{cmd}$, $t_{cmd}$), on the measured tire reaction torque ($\tau_r$), and on a drivetrain model of the vehicle, calculating a commanded angular velocity ($\omega_{cmd}$) of a wheel.

2. The method of claim 1, wherein the driving envelope constraint is expressed in terms of a maximum value of a function of the longitudinal slip and the lateral slip of the at least one wheel.

3. The method of claim 2, wherein the function of the longitudinal slip and the lateral slip of the at least one wheel is a norm of a combined slip vector ($\sigma_{fl,x}$, $\sigma_{fl,y}$) calculated based on the longitudinal slip and the lateral slip of the at least one wheel.

4. The method of any of claims 1 to 3, wherein the driving envelope constraint is expressed in terms of a maximum value of a linear combination of the longitudinal slip and the lateral slip of the at least one wheel.

5. The method of any of claims 1 to 4, wherein

the lateral slip of the at least one wheel comprises a sideslip angle $(\alpha_f)$ of the at least one wheel; and/or
the longitudinal slip of the at least one wheel comprises a slip ratio $(\lambda_f)$ of the at least one wheel.

6. The method of any of claims 1 to 5, wherein an area of the allowable two-dimensional domain is fixed by selecting a maximum lateral slip and a maximum longitudinal slip.

7. The method of any of claims 1 to 6, wherein the constraints comprise at least two different driving envelope constraints for the at least one wheel of the vehicle, and wherein the method further comprises a step of:

   - selecting one of the two different driving envelope constraints according to a driving mode.

8. The method of any of claims 1 to 7, wherein acquiring input control variables $(\delta_{cmd}, \omega_{cmd})$ based on controls $(s_{cmd} b_{cmd}, t_{cmd})$ transmitted by a driver of the vehicle (220) through control members (221, 222) comprises expressing at least one of the controls $(s_{cmd}, b_{cmd}, t_{cmd})$ as being proportional to an input control variable.

9. The method of any of claims 1 to 8, further comprising the steps of:

   - based on the at least one output control variable $(\delta_{mpc}, \omega_{mpc})$, calculating at least one corrected control $(s_{adas}, b_{adas}, t_{adas})$, and
   - using at least one corrected control $(s_{adas}, b_{adas}, t_{adas})$, instead of a control $(s_{cmd}, b_{cmd}, t_{cmd})$ of the driver, to control the vehicle (220).

10. The method of claim 9, wherein the method further comprises a step of:

    - tracking an angular velocity $(\omega_f)$ of a wheel with a controller (206) so as to calculate the corrected controls $(b_{adas}, t_{adas})$ on the braking and throttle pedals (221) of the vehicle (220).

11. The method of any of claims 1 to 10, wherein the constraints further include at least one driving envelope constraint on at least a second wheel of the vehicle, the resulting driving envelope constraint setting an allowable range for at least a sideslip angle $(\alpha_{r,max})$ of the at least second wheel (101, 105).

12. A computer program comprising instructions which, when the program is executed by a computer, cause the computer to carry out the steps of the method of any one of claims 1 to 11.

13. A computer-readable storage medium (11) comprising instructions which, when executed by a computer, cause the computer to carry out the steps of the method of any one of claims 1 to 11.

14. A vehicle control system (10) for controlling control variables of a vehicle comprising one or more processors (12) and a computer-readable medium (11); the computer-readable medium (11) comprising computer instructions stored therein, wherein the instructions, when executed by the one or more processors (12), cause the one or more processors to carry out the steps of method of any one of claims 1 to 11.

**Patentansprüche**

1. Computerimplementiertes Verfahren zum Berechnen von Steuerungsvariablen eines Fahrzeugs, umfassend:

   - Bereitstellen eines dynamischen Modells (100) des Fahrzeugs, das die Fahrzeugdynamik beschreibt, das dynamische Modell (100) umfassend Zustandsvariablen, die Zustandsvariablen umfassend mindestens zwei Variablen $(\beta, r)$, die repräsentativ für eine seitliche Bewegung des Fahrzeugs und/oder eine Drehbewegung des Fahrzeugs sind, wobei diese mindestens zwei Variablen abhängig sind von Seitenschlupf und/oder Längsschlupf eines oder mehrerer Räder des Fahrzeugs;
   - Erfassen von Eingangssteuerungsvariablen basierend auf Steuerungen $(s_{cmd}, b_{cmd}, t_{cmd})$, die von einem Fahrer des Fahrzeugs (220) über Steuerelemente (221, 222) übertragen werden, die Eingangssteuerungsvariablen umfassend mindestens einen Lenkwinkel $(\delta_{cmd})$ eines Rads (103, 107) des Fahrzeugs oder eine Winkelgeschwindigkeit $(\omega_{cmd})$ eines solchen Rads (103, 107);
   - Erfassen der Zustandsvariablen $(\beta, r)$ des Fahrzeugs;
   - basierend auf den erfassten Eingangssteuerungsvariablen $(\delta_{cmd}, \omega_{cmd})$ und den erfassten Zustandsvariablen

$(\beta, r)$, Berechnen mindestens einer Ausgangssteuerungsvariablen ($\delta_{adas}$, $\omega_{adas}$), die repräsentativ für die Steuerungen des Fahrzeugs ist, unter Verwendung einer modellprädiktiven Steuerung (205); wobei

- ein Berechnen mindestens einer Ausgangssteuerungsvariablen ($\delta_{adas}$, $\omega_{adas}$) des Fahrzeugs unter Verwendung einer modellprädiktiven Steuerung (205) basierend auf dem dynamischen Modell (100) des Fahrzeugs erfolgt, um eine Kostenfunktion (C) über einen rückläufigen Horizont unter Verwendung der erfassten Eingangssteuerungsvariablen ($\delta_{cmd}$, $\omega_{cmd}$) als Eingangsziel zu minimieren, wobei Beschränkungen erfüllt werden;
- die Beschränkungen mindestens eine Fahrbereichsbeschränkung für mindestens ein Rad (103, 107) des Fahrzeugs beinhalten,
- wobei die mindestens eine Fahrbereichsbeschränkung für zwei Parameter des mindestens einen Rads einen zulässigen zweidimensionalen Bereich definiert, innerhalb dessen ein Schlupf des mindestens einen Rads als zulässig betrachtet wird, wobei diese zwei Parameter den Längsschlupf und den Querschlupf des mindestens einen Rads beschreiben;

wobei ein Erfassen von Eingangssteuerungsvariablen ($\delta_{cmd}$, $\omega_{cmd}$) basierend auf Steuerungen ($s_{cmd}, b_{cmd}, t_{cmd}$), die von einem Fahrer des Fahrzeugs (220) über die Steuerelemente (221, 222) übertragen werden, Folgendes umfasst:

- Messen eine Radreaktionsmoments ($\tau_r$),
- Erfassen von Steuerungen ($b_{cmd}$, $t_{cmd}$), die von einem Fahrer über Gas- und Bremspedal (221), die in den Steuerelementen (221, 222) enthalten sind, übertragen werden; und
- basierend auf der erfassten Steuerungen ($b_{cmd}$, $t_{cmd}$), des gemessenen Reifenreaktionsmoments ($T_r$) und eines Antriebsstrangmodells des Fahrzeugs die Berechnen einer befohlenen Winkelgeschwindigkeit ($\omega_{cmd}$) eines Rads.

2. Verfahren nach Anspruch 1, wobei die Fahrbereichsbeschränkung als Maximalwert einer Funktion des Längsschlupfs und des Querschlupfs des mindestens einen Rads ausgedrückt wird.

3. Verfahren nach Anspruch 2, wobei die Funktion des Längsschlupfs und des Querschlupfs des mindestens einen Rads eine Norm eines kombinierten Schlupfvektors ($\sigma_{fl, x}$, $\sigma_{fl, y}$) ist, der basierend auf dem Längsschlupf und dem Querschlupf des mindestens einen Rads berechnet wird.

4. Verfahren nach einem der Ansprüche 1 bis 3, wobei die Fahrbereichsbeschränkung als Maximalwert einer linearen Kombination aus dem Längsschlupf und dem Querschlupf des mindestens einen Rads ausgedrückt wird.

5. Verfahren nach einem der Ansprüche 1 bis 4, wobei

der Seitenschlupf des mindestens einen Rads einen Abrutschwinkel ($\alpha_f$) des mindestens einen Rads vergrößert; und/oder
der Längsschlupf des mindestens einen Rads ein Schlupfverhältnis ($\lambda_f$) des mindestens einen Rads umfasst.

6. Verfahren nach einem der Ansprüche 1 bis 5, wobei eine Fläche des zulässigen zweidimensionalen Bereichs durch Auswählen eines maximalen Querschlupfs und eines maximalen Längsschlupfs festgelegt wird.

7. Verfahren nach einem der Ansprüche 1 bis 6, wobei die Beschränkungen mindestens zwei verschiedene Fahrbereichsbeschränkungen für das mindestens eine Rad des Fahrzeugs umfassen, und wobei das Verfahren ferner einen folgenden Schritt umfasst:

- Auswählen einer der zwei verschiedenen Fahrbereichsbeschränkungen gemäß einem Fahrmodus.

8. Verfahren nach einem der Ansprüche 1 bis 7, wobei dem ein Erfassen von Eingangssteuerungsvariablen ($\delta_{cmd}$, $\omega_{cmd}$) basierend auf Steuerungen ($s_{cmd}, b_{cmd}, t_{cmd}$), die von einem Fahrer des Fahrzeugs (220) durch Steuerelemente (221, 222) übertragen werden, ein Ausdrücken mindestens einer der Steuerungen ($s_{cmd}, b_{cmd}, t_{cmd}$) als proportional zu einer Eingangssteuerungsvariablen ausgedrückt wird.

9. Verfahren nach einem der Ansprüche 1 bis 8, ferner umfassend die folgenden Schritte:

- basierend auf der mindestens einer Ausgangssteuerungsvariablen ($\delta_{cmd}$, $\omega_{cmd}$), Berechnen mindestens einer korrigierten Steuerung ($s_{adas}$, $b_{adas}$, $t_{adas}$), und
- Verwenden mindestens einer korrigierten Steuerung ($S_{adas}$, $b_{adas}$, $t_{adas}$), anstelle einer Steuerung (($s_{cmd}$, $b_{cmd}$, $t_{cmd}$) des Fahrers, um das Fahrzeug (220) zu steuern.

10. Verfahren nach Anspruch 9, wobei das Verfahren ferner einen folgenden Schritt umfasst:

- Verfolgen der Winkelgeschwindigkeit ($\omega_f$) eines Rads mit einer Steuerung (206), um die korrigierten Steuerungen ($b_{adas}$, $t_{adas}$) des Brems- und Gaspedals (221) des Fahrzeugs (220) zu berechnen.

11. Verfahren nach einem der Ansprüche 1 bis 10, wobei die Beschränkungen ferner mindestens eine Fahrbereichsbeschränkung für mindestens ein zweites Rad des Fahrzeugs umfassen, wobei die resultierende Fahrbereichsbeschränkung einen zulässigen Bereich für mindestens einen Abrutschwinkel ($\alpha_{r,\,max}$) des mindestens zweiten Rads (101, 105) festlegt.

12. Computerprogramm, umfassend Anweisungen, die, wenn das Programm von einem Computer ausgeführt wird, den Computer veranlassen, die Schritte des Verfahrens nach einem der Ansprüche 1 bis 11 durchzuführen.

13. Computerlesbares Speichermedium (11), umfassend Anweisungen, die, wenn sie von einem Computer ausgeführt werden, den Computer veranlassen, die Schritte des Verfahrens nach einem der Ansprüche 1 bis 11 durchzuführen.

14. Fahrzeugsteuerungssystem (10) zum Steuern von Steuerungsvariablen eines Fahrzeugs, umfassend einen oder mehrere Prozessoren (12) und ein computerlesbares Medium (11); das computerlesbare Medium (11) umfassend darin gespeicherte Computeranweisungen, wobei die Anweisungen, wenn sie von dem einen oder den mehreren Prozessoren (12) ausgeführt werden, den einen oder die mehreren Prozessoren veranlassen, die Verfahrensschritte nach einem der Ansprüche 1 bis 11 durchzuführen.

## Revendications

1. Procédé mis en œuvre par calculateur destiné à calculer des variables de commande d'un véhicule comprenant le fait de :

- prévoir un modèle dynamique (100) du véhicule décrivant la dynamique de véhicule, le modèle dynamique (100) comprenant des variables d'état, les variables d'état comprenant au moins deux variables *(b, r)* représentatives d'un mouvement latéral du véhicule et/ou d'un mouvement de rotation du véhicule, telle que au moins deux variables qui sont fonction du glissement latéral et/ou du glissement longitudinal d'une ou plusieurs roues du véhicule ;
- acquérir des variables de commande d'entrée sur la base de commandes ($s_{cmd}$, $b_{cmd}$, $t_{cmd}$) transmises par un conducteur du véhicule (220) par l'intermédiaire d'éléments de commande (221, 222), les variables de commande d'entrée comprenant au moins un angle de braquage ($d_{cmd}$) d'une roue (103, 107) du véhicule ou une vitesse angulaire ($w_{cmd}$) d'une telle roue (103, 107) ;
- acquérir les variables d'état *(b, r)* du véhicule ;
- sur la base des variables de commande d'entrée acquises ($d_{cmd}$, $w_{cmd}$) et des variables d'état acquises *(b, r)*, calculer au moins une variable de commande de sortie ($d_{adas}$, $w_{adas}$) représentative des commandes du véhicule utilisant une commande prédictive à modélisation (205) ; selon lequel

- le calcul de au moins une variable de commande de sortie ($d_{adas}$, $w_{adas}$) du véhicule en utilisant la commande prédictive à modélisation (205) est basé sur le modèle dynamique (100) du véhicule, de façon à minimiser une fonction de coût (C) à un horizon en recul en utilisant les variables de commande d'entrée acquises ($d_{cmd}$, $w_{cmd}$) comme cible d'entrée tout en satisfaisant des contraintes ;
- les contraintes comprenant au moins une contrainte d'enveloppe d'entraînement pour au moins une roue (103, 107) du véhicule,
- ladite au moins une contrainte d'enveloppe d'entraînement définissant, pour deux paramètres de ladite au moins une roue, un domaine bidimensionnel admissible dans lequel un glissement de la au moins une roue est considéré admissible, ces deux paramètres décrivant un glissement longitudinal et un glissement latéral de la au moins une roue ;

l'acquisition de variables de commande d'entrée ($d_{cmd}$, $w_{cmd}$) sur la base de commandes ($S_{cmd}$, $b_{cmd}$, $t_{cmd}$)

transmises par un conducteur du véhicule (220) par l'intermédiaire des éléments de commande (221, 222) comprenant le fait de :

> - mesurer un couple de réaction de pneumatique ($t_r$) d'une roue ;
> - acquérir des commandes ($b_{cmd}$, $t_{cmd}$) transmises par un conducteur par l'intermédiaire de pédales d'accélérateur et de frein (221) comprises dans les éléments de commande (221, 222) ; et
> - sur la base des commandes acquises ($b_{cmd}$, $t_{cmd}$), du couple de réaction de pneumatique mesuré ($t_r$), et d'un modèle de transmission du véhicule, calculer une vitesse angulaire commandée ($w_{cmd}$) d'une roue.

2. Procédé selon la revendication 1, selon lequel la contrainte d'enveloppe d'entraînement est exprimée en termes d'une valeur maximale d'une fonction du glissement longitudinal et du glissement latéral de la au moins une roue.

3. Procédé selon la revendication 2, selon lequel la fonction du glissement longitudinal et du glissement latéral de la au moins une roue est une norme d'un vecteur de glissement combiné ($s_{fl,x}$, $s_{fl,y}$) calculé sur la base du glissement longitudinal et du glissement latéral de la au moins une roue.

4. Procédé selon l'une quelconque des revendications 1 à 3, selon lequel la contrainte d'enveloppe d'entraînement est exprimée en termes d'une valeur maximale d'une combinaison linéaire du glissement longitudinal et du glissement latéral de la au moins une roue.

5. Procédé selon l'une quelconque des revendications 1 à 4, selon lequel

> le glissement latéral de la au moins une roue comprend un angle de dérapage ($a_f$) de la au moins une roue ; et/ou
> le glissement longitudinal de la au moins une roue comprend un rapport de glissement ($l_f$) de la au moins une roue.

6. Procédé selon l'une quelconque des revendications 1 à 5, selon lequel une zone du domaine bidimensionnel admissible est fixée en choisissant un glissement latéral maximum et un glissement longitudinal maximum.

7. Procédé selon l'une quelconque des revendications 1 à 6, selon lequel les contraintes comprennent au moins deux contraintes d'enveloppe d'entraînement différentes pour la au moins une roue du véhicule, et selon lequel le procédé comprend en outre une étape de :

> - sélection d'une des deux contraintes d'enveloppe d'entraînement différentes en fonction d'un mode d'entraînement.

8. Procédé selon l'une quelconque des revendications 1 à 7, selon lequel l'acquisition de variables de commande d'entrée ($d_{cmd}$, $w_{cmd}$) sur la base de commandes ($s_{cmd}$, $b_{cmd}$, $t_{cmd}$) transmises par un conducteur du véhicule (220) par l'intermédiaire d'éléments de commande (221, 222) comprend le fait d'exprimer au moins une des commandes ($s_{cmd}$, $b_{cmd}$, $t_{cmd}$) comme étant proportionnelle à une variable de commande d'entrée.

9. Procédé selon l'une quelconque des revendications 1 à 8, comprenant en outre les étapes de :

> - sur la base de la au moins une variable de commande de sortie ($d_{mpc}$, $w_{mpc}$), calcul de au moins une commande corrigée ($s_{adas}$, $b_{adas}$, $t_{adas}$), et
> - utilisation de au moins une commande corrigée ($s_{adas}$, $b_{adas}$, $t_{adas}$), au lieu d'une commande ($s_{cmd}$, $b_{cmd}$, $t_{cmd}$) du conducteur, pour commander le véhicule (220).

10. Procédé selon la revendication 9, selon lequel le procédé comprend en outre une étape de :

> - suivi d'une vitesse angulaire ($w_f$) d'une roue avec un dispositif de commande (206) de façon à calculer les commandes corrigées ($b_{adas}$, $t_{adas}$) sur les pédales de frein et d'accélérateur (221) du véhicule (220).

11. Procédé selon l'une quelconque des revendications 1 à 10, selon lequel les contraintes comprennent en outre au moins une contrainte d'enveloppe d'entraînement sur au moins une deuxième roue du véhicule, la contrainte d'enveloppe d'entraînement résultante établissant une plage admissible pour au moins un angle de dérapage ($a_{r,max}$) de la au moins deuxième roue (101, 105).

12. Programme informatique comprenant des instructions qui, quand le programme est exécuté par un calculateur, amène le calculateur à mettre en œuvre les étapes du procédé selon l'une quelconque des revendications 1 à 11.

13. Support de stockage lisible par un calculateur (11) comprenant des instructions qui, lorsqu'elles sont exécutées par un calculateur, amènent le calculateur à mettre en œuvre les étapes du procédé selon l'une quelconque des revendications 1 à 11.

14. Système de commande de véhicule (10) destiné à commander des variables de commande d'un véhicule comprenant un ou plusieurs processeurs (12) et un support lisible par un calculateur (11) ; le support lisible par un calculateur (11) comprenant des instructions informatiques stockées dedans, dans lequel les instructions, lorsqu'elles sont exécutées par les un ou plusieurs processeurs (12), amènent les un ou plusieurs processeurs à mettre en œuvre les étapes du procédé selon l'une quelconque des revendications 1 à 11.

**FIG. 1**

**FIG. 2**

**FIG. 3**

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102016214564 A1

**Non-patent literature cited in the description**

- **BEAL, CRAIG EARL** ; **GERDES, J. CHRISTIAN.** Model predictive control for vehicle stabilization at the limits of handling.. *IEEE Transactions on Control Systems Technology*, 2012, vol. 21 (4), 1258-1269
- Driving Envelope: On Vehicle Stability Through Tire Capacities. **EFREMOV, DENIS** ; **KLAUČO, MARTIN** ; **HANIŠ, TOMÁŠ**. 2022 IEEE Intelligent Vehicles Symposium (IV).. IEEE, 2022, 1188-1193
- **FALCONE, PAOLO** ; **TSENG, H. ERIC** ; **ASGARI, JAHAN et al.** Integrated braking and steering model predictive control approach in autonomous vehicles.. *IFAC Proceedings*, 2007, vol. 40 (10), 273-278
- **ATAEI, MANSOUR** ; **KHAJEPOUR, AMIR** ; **JEON, SOO**. Model predictive control for integrated lateral stability, traction/braking control, and rollover prevention of electric vehicles.. *Vehicle system dynamics*, 2020, vol. 58 (1), 49-73